# EUROPEAN PATENT APPLICATION

(11) **EP 4 039 539 A1**
(43) Date of publication of application: **10.08.2022**
(21) Application number: 20886903.2
(22) Date of filing: 12.11.2020
(51) Int. Cl.: B60P 1/28, B62D 21/18, B23K 31/00

(54) **BODY FRAME OF TRANSPORT VEHICLE, TRANSPORT VEHICLE, AND METHOD FOR MANUFACTURING BODY FRAME OF TRANSPORT VEHICLE**

(30) Priority: 12.11.2019 JP 2019204759
(71) Applicant: Komatsu Ltd., Minato-ku Tokyo 107-8414 (JP)
(72) Inventor: TSUJIMOTO, Takeaki, Tokyo 107-8414 (JP); MIWA, Hirofumi, Tokyo 107-8414 (JP)
(74) Representative: Grünecker Patent- und Rechtsanwälte PartG mbB
(86) International application number: PCT/JP2020/042199
(87) International publication number: WO 2021/095796

(57) **Abstract**

In a body frame of a transport vehicle, at least a front frame among the front frame and a rear frame includes a frame body having a pair of side members and a cross member, and a frame welded portion at which the side member and the cross member are fixed to each other by welding, in which an impact mark extending along the frame welded portion is formed on a region including a weld toe portion of the frame welded portion. The front frame further includes a hinge member as the cross member, the hinge member includes a plurality of plates and a hinge member welded portion at which the plurality of plates are fixed to each other by welding, and an impact mark extending along the hinge member welded portion is formed on a region including a weld toe portion of the hinge member welded portion.

## Description

### [Technical Field]

The present invention relates to a body frame of a transport vehicle, a transport vehicle, and a method for manufacturing a body frame of a transport vehicle.

Priority is claimed on Japanese Patent Application No. 2019-204759, filed November 12, 2019, the content of which is incorporated herein by reference.

### [Background Art]

Patent Document 1 discloses a structure of a body frame of a dump truck (transport vehicle). The body frame is configured by fixing, by a welded portion, a pair of side members and a cross member disposed over the pair of side members.

### [Citation List]

### [Patent Document]

[Patent Document 1]
Japanese Unexamined Patent Application, First Publication No. 2018-47861

### [Summary of Invention]

### [Technical Problem]

By the way, in the transport vehicle described above, higher productivity and low fuel consumption are requested. For achieving the reduction of the weight of the body frame in response to this request, for example, there is a case in which a steel material having higher strength than the related art is thinned and used. However, in a case in which a steel material having a high strength is welded to form the body frame, since the tensile residual stress of the welded portion is large, there is a possibility that the fatigue strength is decreased when only welding suitable for a plate thickness of the thinned steel material is performed. Therefore, regardless of the material configuring the body frame, it is generally requested to improve the fatigue strength of the welded portion in the body frame.

The present invention has been made in view of such a problem and is to provide a body frame of a transport vehicle, a transport vehicle, and a method for manufacturing a body frame of a transport vehicle, which can improve the fatigue strength of a welded portion.

### [Solution to Problem]

An aspect of the present invention relates to a body frame of a transport vehicle, the transport vehicle including a front frame, a rear frame, and a universal joint connecting the front frame and the rear frame. The body frame including the front frame and the rear frame, in which at least the front frame among the front frame and the rear frame includes: a frame body having a pair of side members extending in a front-rear direction at an interval from each other in a width direction, and a cross member extending in the width direction over the pair of side members; and at least one frame welded portion at which the side member and the cross member are fixed to each other by welding. An impact mark extending along the frame welded portion is formed on a region including a weld toe portion of the frame welded portion. The front frame further includes a hinge member as the cross member connected to the universal joint, the hinge member includes a plurality of plates, and at least one hinge member welded portion at which the plurality of plates are fixed to each other by welding. An impact mark extending along the hinge member welded portion is formed on a region including a weld toe portion of the hinge member welded portion.

Another aspect of the present invention relates to a transport vehicle including a front frame, a rear frame, and a universal joint connecting the front frame and the rear frame, in which at least the front frame among the front frame and the rear frame is the body frame of a transport vehicle described above.

Still another aspect of the present invention relates to a method for manufacturing a body frame of a transport vehicle, the method including a step of preparing a frame body having a pair of side members extending in a front-rear direction at an interval from each other in a width direction, and a cross member extending in the width direction over the pair of side members, a step of forming at least one frame welded portion at which the side member and the cross member are fixed to each other by welding, and a step of performing a peening process such that an impact mark extending along the frame welded portion is formed on a region including a weld toe portion of the frame welded portion.

### [Advantageous Effects of Invention]

According to the body frame of the transport vehicle, the transport vehicle, and the method for manufacturing the body frame of the transport vehicle described in the above aspects, the fatigue strength of the welded portion can be improved.

### [BRIEF DESCRIPTION OF DRAWINGS]

Fig. 1 is a side view of an articulated dump truck as a transport vehicle according to an embodiment of the present invention.
Fig. 2 is a perspective view of a body frame of the transport vehicle according to the embodiment of the present invention.
Fig. 3 is an exploded perspective view of the body frame of the transport vehicle according to the embodiment of the present invention.
Fig. 4 is a schematic view showing a structure of a first welded portion.
Fig. 5 is a schematic view showing a structure of a second welded portion.
Fig. 6 is a schematic view showing a structure of a third welded portion.
Fig. 7 is a schematic view showing a structure of a fourth welded portion.
Fig. 8 is a flowchart showing a partial procedure of a method for manufacturing the transport vehicle according to the embodiment of the present invention.
Fig. 9 is a flowchart showing a partial procedure of the method for manufacturing the transport vehicle according to the embodiment of the present invention.
Fig. 10 is a schematic view showing a structure of the welded portion of a first modification example.
Fig. 11 is a schematic view showing a structure of the welded portion of a second modification example.

### [DESCRIPTION OF EMBODIMENTS]

### <Dump Truck (Transport Vehicle)>

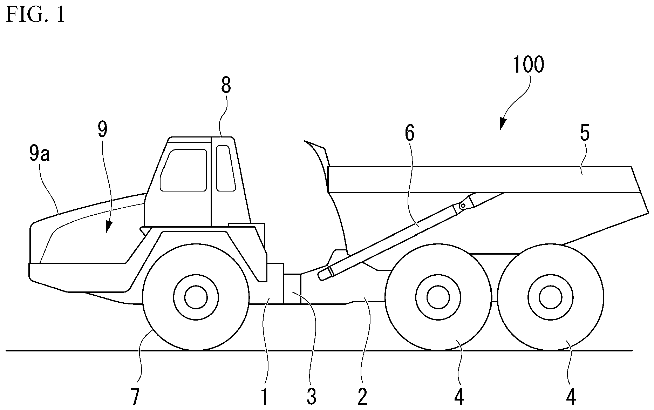

Hereinafter, an embodiment of the present invention will be described in detail with reference to Figs. 1 to 8.

As shown in Fig. 1, a dump truck 100 as an exemplary example of a transport vehicle includes a front frame 1 and a rear frame 2 as a body frame. The front frame 1 or the rear frame 2 is referred to as a frame body 10. In addition, the front frame 1 and the rear frame 2 are connected by a universal joint 3 and are swingably connected to each other, and the dump truck 100 is an articulated type dump truck.

In the rear frame 2, a rear wheel 4 and a dump body 5 are provided. The dump body 5 is provided to freely rise and fall with respect to the rear frame 2. The dump body 5 rises and falls as a hoist cylinder 6, which is a hydraulic actuator, expands and contracts.

In the front frame 1, a front wheel 7, a cab 8, and an engine room 9 are provided. The engine room 9 is disposed in front of the cab 8 and is covered with an exterior cover 9a.

### <Front Frame>

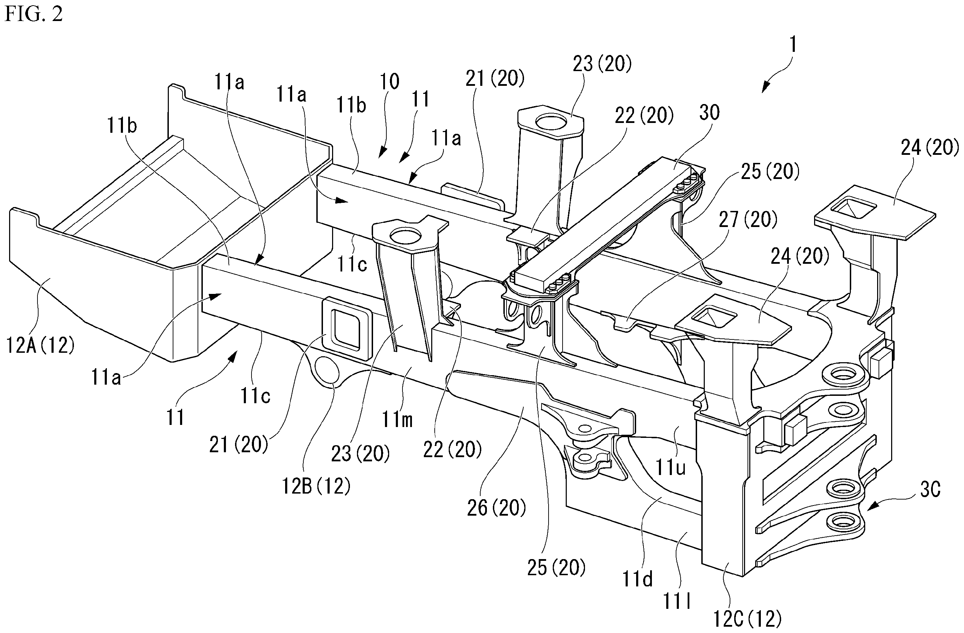

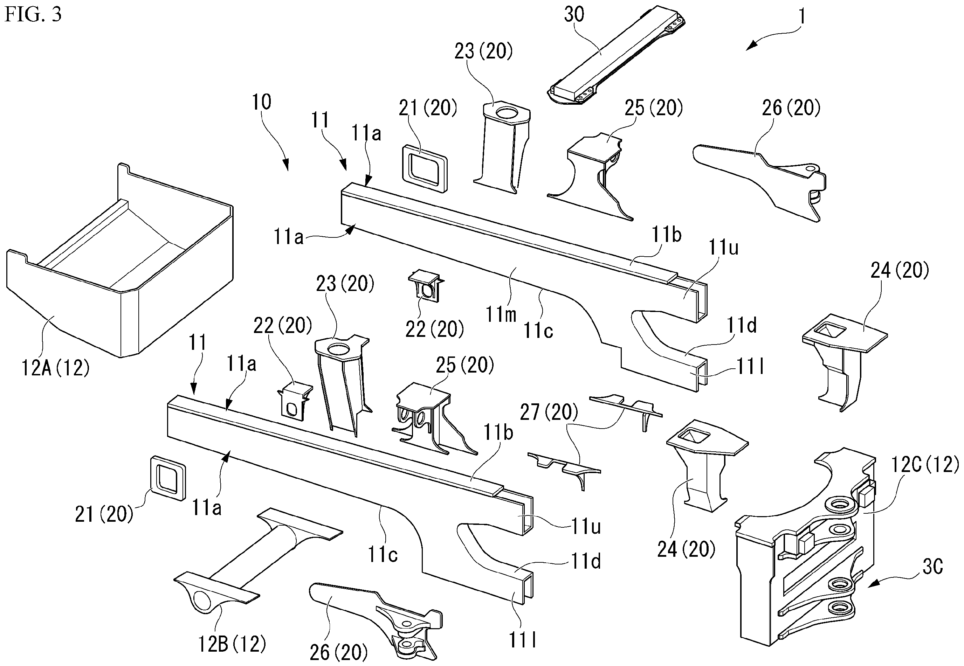

The front frame 1 has a frame body 10, and a bracket 20 which can support each structure, specifically, as shown in Figs. 2 and 3.

### <Frame body>

The frame body 10 has a pair of side members 11 and a cross member 12. In the following description, the term "fix" means being joined by welding or being fixed by a fastening member.

### <Side Member>

The side member 11 has a pair of side plates 11a, an upper plate 11b (connection plate), a lower plate 11c (connection plate), and an intermediate plate 11d. The side plate 11a extends in a front-rear direction of the dump truck and is disposed such that both surfaces thereof in a thickness direction face a vehicle width direction. The upper plate 11b covers an upper side end edge (upper end portion) of the side plate 11a. The lower plate 11c covers a lower side end edge (lower end portion) of the side plate 11a. The upper plate 11b and the lower plate 11c are connected to intersect each other in an extending direction of the side plate 11a as viewed from the front-rear direction.

The side plate 11a has a main portion 11m, an upper part branch portion 11u, and a lower part branch portion 111. The upper part branch portion 11u and the lower part branch portion 111 are integrally provided behind the main portion 11m, and branch from each other in the vertical direction. The upper part branch portion 11u is disposed at an interval above the lower part branch portion 111. The intermediate plate 11d is attached to end edges of the upper part branch portion 11u and the lower part branch portion 11l facing each other.

### <Cross Member>

In the present embodiment, as the cross member 12, a bumper 12A, a De Dion cross 12B, and a hinge member 12C are provided. The De Dion cross 12B is a cross member 12 that swingably supports a trailing arm (not shown) which is fixedly connected to a De Dion type axle (not shown).

The bumper 12A is attached to a front end portion of the side member 11. The bumper 12A has a box shape that is open upward.

The De Dion cross 12B is laid between the pair of side members 11 over the vehicle width direction. The De Dion cross 12B is attached to a downward facing surface of the side member 11, that is, the lower plate 11c.

The hinge member 12C is attached to a rear end portion of the side member 11. The hinge member 12C has a connection portion 3C connected to the universal joint 3. The hinge member 12C is configured by fixing a plurality of combined plate-shaped parts to each other.

### <Bracket>

In the present embodiment, as the bracket 20, a seat bracket 21, an engine bracket 22, a front part cab bracket 23, a rear part cab bracket 24, a suspension bracket 25, a steering bracket 26, and a transmission mount bracket 27 are provided. All of these brackets 20 are fixed to the frame body 10.

One seat bracket 21 is provided on each surface of the side member 11 facing outward in the vehicle width direction.

One engine bracket 22 is provided on each surface of the side member 11 facing inward in the vehicle width direction. The engine bracket 22 supports an engine (not shown).

One front part cab bracket 23 is provided on each surface of the side member 11 facing upward. The front part cab bracket 23 extends upward from the side member 11.

The rear part cab bracket 24 is fixed to an upper surface of the hinge member 12C. The cab 8 is supported by the upper ends of the front part cab bracket 23 and the rear part cab bracket 24.

The suspension bracket 25 is provided at an interval behind the front part cab bracket 23 in the side member 11. The suspension bracket 25 supports a suspension cylinder (not shown). In addition, a vertical member 30 is fixed to extend the upper ends of a pair of suspension brackets 25 in the vehicle width direction. The vertical member 30 is fastened and fixed to an upper surface of the suspension bracket 25 at both right and left ends by bolts.

One steering bracket 26 is provided on each surface of the side member 11 facing outward in the vehicle width direction. The steering bracket 26 is positioned below the suspension bracket. One transmission mount bracket 27 is provided on each side member 11 facing inward in the vehicle width direction.

### <First Welded Portion (Frame Welded Portion)>

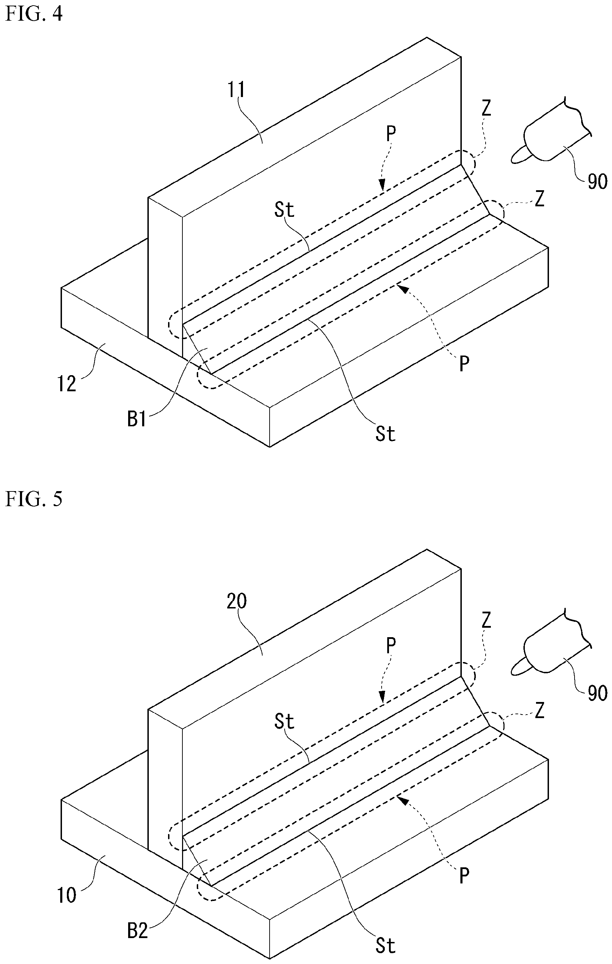

Here, as shown in Fig. 4, the side member 11 and the cross member 12 are fixed to each other by at least one first welded portion (frame welded portion) B1. The first welded portion B1 is any one of a bead formed by fillet welding along a joining portion between the side member 11 and the cross member 12, and a bead formed by fillet welding and butt welding in which a groove portion is provided at the end portion of the side member 11. In a case in which the groove is provided, for example, the end portion of the side member 11 may be provided with a groove called a single bevel groove. Fig. 4 is a view showing, as an exemplary example, a case in which the end portion of the side member 11 has a flat surface portion, which is a flat surface, and the groove is not provided. In addition, Fig. 4 shows, as the fillet welding, one-surface fillet welding in which fillet is formed only on one surface of the side member 11, but in a case in which fillet can be formed on both surfaces of the side member 11, the first welded portion B1 may be formed as both-surface fillet welding. Further, Fig. 4 shows, as an exemplary example, a case in which the end portion of the side member 11 is welded to a front surface of the cross member 11, but the first welded portion B1 may be formed by overlapping part of the front surface of the side member 11 and part of the front surface of the cross member 11 each other and performing welding at each end portion. More specifically, the first welded portion B1 refers to a portion formed by cooling and hardening of a molten pool generated by welding and includes part of the side member 11 or part of the cross member 12 in a case in which the part of the side member 11 or the part of the cross member 12 is molten and hardened during welding work.

The end edges of the first welded portion B1 on both sides in the width direction (both sides in the direction perpendicular to a weld line) are a weld toe portion St. An impact mark P extending along the first welded portion B1 is formed in a region Z (region shown by a broken line in Fig. 4) including the weld toe portion St. The impact mark P is formed by an impact by a peening device 90 (peening process). The peening device 90 applies an impact by ultrasound vibration, supplied air, or the like. As a result, the weld toe portion St is subjected to plastic working to apply compressive residual stress.

### <Second Welded Portion (Bracket Welded Portion)>

As shown in Fig. 5, the bracket 20 and the frame body 10 are fixed to each other by at least one second welded portion (bracket welded portion) B2. The second welded portion B2 is any one of a bead formed by fillet welding along the joining portion between the bracket 20 and the frame body 10, and a bead formed by fillet welding and by butt welding in which the groove is provided at the end portion of the bracket 20. Fig. 5 is a view showing, as an exemplary example, a case in which the groove is not provided at the end portion of the bracket 20. In addition, Fig. 5 shows, as the fillet welding, one-surface fillet welding in which fillet is formed only on one surface of the bracket 20, but in a case in which fillet can be formed on both surfaces of the bracket 20, the second welded portion B2 may be formed as both-surface fillet welding. Further, Fig. 5 shows, as an exemplary example, a case in which the end portion of the bracket 20 is welded to the front surface of the frame body 10, but the second welded portion B2 may be formed by overlapping a part of the front surface of the bracket 20 and a part of the front surface of the frame body 10 and performing welding at each end portion. More specifically, the second welded portion B2 refers to a portion formed by cooling and hardening of a molten pool generated by welding and includes part of the bracket 20 or a part of the frame body 10 in a case in which the part of the bracket 20 or the part of the frame body 10 is molten and hardened during the welding work.

The end edges of the second welded portion B2 on both sides in the width direction (both sides in the direction perpendicular to a weld line) are a weld toe portion St. The impact mark P extending along the second welded portion B2 is formed in the region Z (region shown by a broken line in Fig. 5) including the weld toe portion St. The impact mark P is formed by an impact by the peening device 90 (peening process). The peening device 90 applies an impact by ultrasound vibration, supplied air, or the like. As a result, the weld toe portion St is subjected to plastic working to apply compressive residual stress.

### <Third Welded Portion (Side Member Welded Portion)>

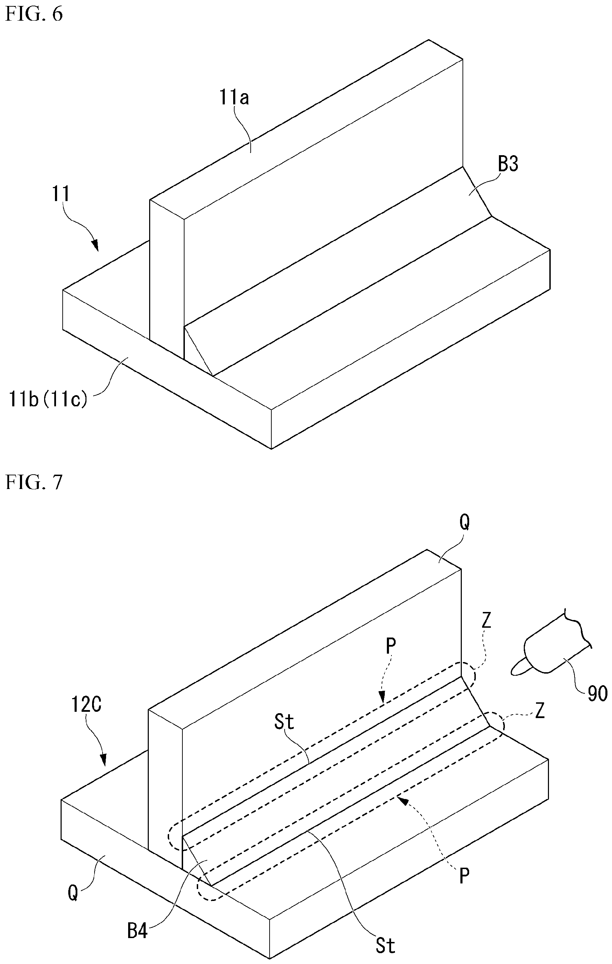

As shown in Fig. 6, the pair of side plates 11a, the upper plate 11b, and the lower plate 11c of the side member 11 are fixed to each other by at least one third welded portion (side member welded portion) B3. The third welded portion B3 is also a bead formed by fillet welding, or a bead formed by fillet welding in which the groove is provided at the end portion of the side plate 11a, similarly to the first welded portion B1 and the second welded portion B2. Fig. 6 is a view showing, as an exemplary example, a case in which the groove is not provided at the end portion of the side plate 11a.

More specifically, the third welded portion B3 refers to a portion formed by cooling and hardening of a molten pool generated by welding and includes part of a welding target in a case in which the part of the members, which are the welding targets, is molten and hardened during the welding work. The impact mark P described above is not formed on the third welded portion B3. That is, the impact by the peening device 90 is not made on the third welded portion B3, and the third welded portion B3 has a smooth front surface.

### <Fourth Welded Portion (Hinge Member Welded Portion)>

As shown in Fig. 7, plates as parts Q configuring the hinge member 12C are fixed to each other by at least one fourth welded portion (hinge member welded portion) B4. The fourth welded portion B4 is any one of a bead formed by fillet welding along the joining portion between the parts Q, and a bead formed by fillet welding and butt welding in which the groove is provided at the end portion of any part Q. In addition, Fig. 7 shows, as the fillet welding, one-surface fillet welding in which fillet is formed only on one surface of one part Q, but in a case in which fillet can be formed on both surfaces of one part Q, the fourth welded portion B4 may be formed as both-surface fillet welding. Fig. 7 is a view showing, as an exemplary example, a case in which the groove is not provided at the end portion of one part Q. Further, Fig. 7 shows, as an exemplary example, a case in which the end portion of one part Q is welded to the front surface of the other part Q, but the fourth welded portion B4 may be formed by overlapping a part of the front surface of the one part Q and part of the front surface of the other part Q, and performing welding at each end portion. More specifically, the fourth welded portion B4 refers to a portion formed by cooling and hardening of a molten pool generated by welding and includes a part of each part Q in a case in which the part of the part Q is molten and hardened during the welding work.

The end edges of the fourth welded portion B4 on both sides in the width direction (both sides in the direction perpendicular to a weld line) are a weld toe portion St. The impact mark P extending along the fourth welded portion B4 is formed in the region Z (region shown by a broken line in Fig. 7) including the weld toe portion St. The impact mark P is formed by an impact by the peening device 90 (peening process). The peening device 90 applies an impact by ultrasound vibration, supplied air, or the like. As a result, the weld toe portion St is subjected to plastic working to apply compressive residual stress.

### <Other welded Portions>

Each bracket 20 is configured by a plurality of parts, and these parts may be fixed to each other by a welded portion having the same impact mark P as the first welded portion B1, the second welded portion B2, and the fourth welded portion B4.

The side plate 11a and the intermediate plate 11d of the side member 11 may be fixed by the welded portion having the same impact mark P as the first welded portion B1, the second welded portion B2, and the fourth welded portion B4.

### <Method for Manufacturing Body Frame>

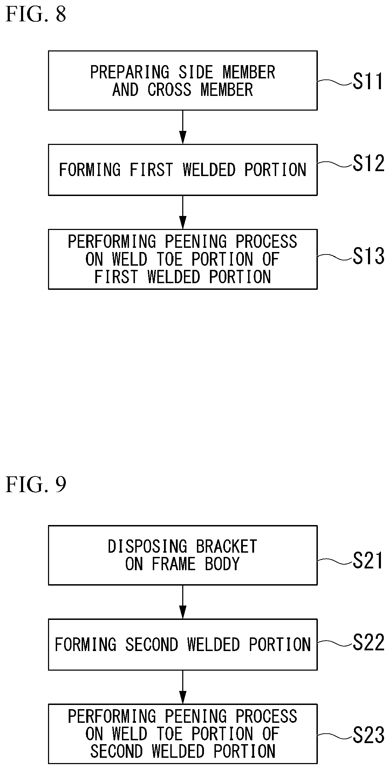

As shown in Fig. 8, a method for manufacturing the body frame includes a step S1 of preparing the side member 11 and the cross member 12, a step S12 of forming the first welded portion B1, and a step S13 of performing the peening process on the first welded portion B1. In the step S12, the first welded portion B1 described above is formed by performing fillet welding by butting each member or fillet welding in which the groove is provided at any end portion of each member on the joining portion between the side member 11 and the cross member 12 combined with each other. Next, the impact mark P described above is formed by performing the peening process on the weld toe portion St of the first welded portion B1 (step S13).

In addition, as shown in Fig. 9, the connection of the bracket 20 and the frame body 10 also includes a step S21 of preparing the bracket 20 and the frame body 10, a step S22 of forming the second welded portion B2, and a step S23 of performing the peening process on the second welded portion B2, similarly to the above. In the step S22, the second welded portion B2 described above is formed by performing fillet welding by butting each member or fillet welding in which the groove is provided at any end portion of each member on the joining portion between the bracket 20 and the frame body 10 combined with each other. Next, the impact mark P described above is formed by performing the peening process on the weld toe portion St of the second welded portion B2 (step S23).

In addition, the fourth welded portion B4 and the impact mark P formed on the fourth welded portion B4 are also formed by the same method as described above. In addition, the step of performing the peening process described above to the third welded portion B3 is not performed.

### <Actions and Effects>

The dump truck having the configuration described above is requested to realize higher productivity and low fuel consumption.

In order to realize the productivity or the low fuel consumption, it is conceivable to achieve the reduction of the weight of the body frame.

In order to achieve the reduction of the weight, thinning of the material may be carried out along with improving in strength of the material of the body frame by using a higher-strength steel material.

However, the strength of the welded portion is not changed. In addition, in a case in which a high-strength steel material is used, the residual tensile stress is increased, and the fatigue life is shortened when only welding suitable for the plate thickness of the thinned steel material is performed. Therefore, it is needed to improve the strength of the welded portion and improve the fatigue life of the welded portion.

On the other hand, in the present embodiment, the first welded portion B1 is formed on the frame body 10 which is a main portion of the front frame 1 as the body frame. That is, the side member 11 and the cross member 12 are fixed to each other via at least one first welded portion B1.

In the first welded portion B1, the impact mark P is formed by performing the peening process on the weld toe portion St of the fillet welding by butting each member or the fillet welding in which the groove is provided at one end portion of each member. Therefore, in addition to the fineness of the crystal grains of the metal structure of the weld toe portion St, which is particularly prone to a crack or the like, a high compressive residual stress is applied via the impact. As a result, it is possible to achieve the improvement of the strength and the improvement of the fatigue life. In particular, by improving the strength of the frame body 10 which is a main portion of the front frame, the vehicle as a whole can be configured to have high strength.

In addition, the bracket 20 supports another structure, and thus a large load is likely to be applied. Exemplary examples of another structure include an engine, a transmission, a cab, and an axle. Since the bracket 20 is fixed to a fixation target (side member 11) by the second welded portion B2, the strength and the fatigue life can be improved as in the first welded portion B1.

Here, since the welded portion of the side plate 11a, the upper plate 11b, and the lower plate 11c of the side member 11 extend in the vehicle front-rear direction, the number of the welding points or the welding regions is increased. By fixing such a portion by the third welded portion B3 which is not subjected to the peening process of giving the impact mark P, decreasing of work time in the manufacturing process can be achieved and the improvement of the productivity can be achieved.

In addition, in the articulated type dump truck 100, the configuration is adopted in which the front frame 1 and the rear frame 2 are connected by the universal joint 3. When the dump truck 100 travels, a large load is applied to the hinge member 12C having the connection portion 3C on a side of the front frame 1, which is a portion to which the universal joint 3 is connected. In the present embodiment, the parts configuring the hinge member 12C are fixed to each other by at least one fourth welded portion B4, so that the strength and fatigue life can be improved similarly to those of the first welded portion B1 and the second welded portion B2.

Further, according to the present embodiment, after forming at least one first welded portion B1 at the joining portion between the side member 11 and the cross member 12, only by forming the impact mark P on the weld toe portion St of the first welded portion B1, the improvement of the strength and the fatigue life of the first welded portion B1 can be easily realized.

Moreover, according to the present embodiment, after forming at least one second welded portion B2 at the joining portion of the bracket 20 and the frame body 10, only by forming the impact mark P on the weld toe portion St of the second welded portion B2, the improvement of the strength and the fatigue life of the second welded portion B2 can be easily realized.

### <Other Embodiments>

The embodiment according to the present invention has been described above, but the present invention is not limited to this, and can be appropriately modified without departing from the technical idea of the present invention.

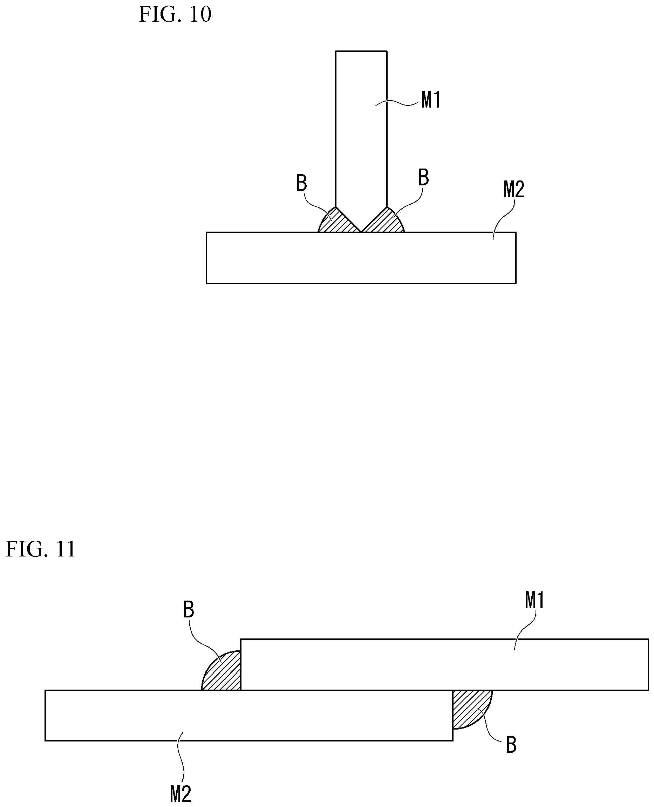

For example, the first welded portion B1, the second welded portion B2, the third welded portion B3, and the fourth welded portion B4 may be a welded portion B of a first modification example shown in Fig. 10. That is, in the structure shown in Fig. 10, in a case in which a V-shaped groove is provided on one member M1 and the groove is butt welded to a surface of the other member M2 via the welded portion B, the weld penetration and the fusion of the members M1 and M2, which are base materials, and the welded portion B, and thus the welding strength can be further improved.

In addition, the first welded portion B1, the second welded portion B2, the third welded portion B3, and the fourth welded portion B4 may be the welded portion B of a second modification example shown in Fig. 11. That is, in the structure shown in Fig. 11, one member M1 and the other member M2 extend in parallel and overlap each other. Moreover, the welded portion B as fillet welding is formed between the end portion of one member M1 and an upper surface of the other member M2, and between the end portion of the other member M2 and a lower surface of the one member M1. In this case, the two members can be firmly welded without forming the groove.

In addition, for example, the rear frame 2 may adopt the same configuration as described above. More specifically, a configuration is conceivable in which at least one of the side member and the cross member of the rear frame 2 is fixed by the first welded portion B1. In addition, a configuration may be adopted in which the bracket that supports another structure (for example, a dump body, a hoist cylinder, and the like) is fixed to the frame body configured by the side member and the cross member of the rear frame 2 via the second welded portion B2.

Further, in the rear frame 2, the side plate, the upper plate, and the lower plate of the side member may be fixed to each other by the third welded portion B3 having no impact mark.

Even in the rear frame 2, it is desirable that the cross member connected to the universal joint 3 adopts a configuration in which at least one of the plurality of parts configuring the cross member is fixed by the fourth welded portion B4.

Further, the present invention may be applied to a rigid type dump truck having a single body frame, as well as the articulated type dump truck as described above.

### <Additional Note>

A body frame of a transport vehicle according to one aspect includes a frame body having a pair of side members extending in a front-rear direction at an interval from each other in a width direction, and a cross member extending in the width direction over the pair of side members, and at least one first welded portion at which the side member and the cross member are fixed to each other by welding, in which an impact mark extending along the first welded portion is formed on a region including a weld toe portion of the first welded portion.

### [Industrial Applicability]

According to the body frame of the transport vehicle, the transport vehicle, and the method for manufacturing the body frame of the transport vehicle described in the above disclosure, the fatigue strength of the welded portion can be improved.

### [Reference Signs List]

1: Front frame
2: Rear frame
3: Universal joint
3C: Connection portion
4: Rear wheel
5: Dump body
6: Hoist cylinder
7: Front wheel
8: Cab
9: Engine room
9a: Exterior cover
10: Frame body
11: Side member
11a: Side plate
11b: Upper plate
11c: Lower plate
11d: Intermediate plate
11m: Main portion
11u: Upper part branch portion
11l: Lower part branch portion
12: Cross member
12A: Bumper
12B: De Dion cross
12C: Hinge member
20: Bracket
21: Seat bracket
22: Engine bracket
23: Front part cab bracket
24: Rear part cab bracket
25: Suspension bracket
26: Steering bracket
27: Transmission mount bracket
30: Vertical member
90: Peening device
100: Dump truck
B1: First welded portion (frame welded portion)
B2: Second welded portion (bracket welded portion)
B3: Third welded portion (side member welded portion)
B4: Fourth welded portion (hinge member welded portion)
P: Impact mark
Q: Part
St: Weld toe portion
Z: Region
B: welded portion
M1: One member
M2: the other member

## Claims

1. A body frame of a transport vehicle, the transport vehicle including a front frame, a rear frame, and a universal joint connecting the front frame and the rear frame, the body frame comprising the front frame and the rear frame,
wherein at least the front frame among the front frame and the rear frame includes
a frame body having a pair of side members extending in a front-rear direction at an interval from each other in a width direction, and a cross member extending in the width direction over the pair of side members, and
at least one frame welded portion at which the side member and the cross member are fixed to each other by welding,
wherein an impact mark extending along the frame welded portion is formed on a region including a weld toe portion of the frame welded portion,
wherein the front frame further includes a hinge member as the cross member connected to the universal joint,
wherein the hinge member includes
a plurality of plates, and
at least one hinge member welded portion at which the plurality of plates are fixed to each other by welding, and
wherein an impact mark extending along the hinge member welded portion is formed on a region including a weld toe portion of the hinge member welded portion.

2. The body frame of a transport vehicle according to Claim 1,
wherein the side member has a flat surface portion or a groove portion at an end portion of the side member, and
the frame welded portion is a bead at which the flat surface portion or the groove portion of the side member, and the cross member are fixed to each other by fillet welding.

3. The body frame of a transport vehicle according to Claim 1 or 2,
wherein the plate has a groove portion at an end portion of the plate, and
the groove portion at the end portion of the plate is fixed at the hinge member welded portion by fillet welding.

4. The body frame of a transport vehicle according to any one of Claims 1 to 3, further comprising:
a bracket disposed on the frame body and configured to support a structure; and
at least one bracket welded portion at which the frame body and the bracket are fixed to each other by fillet welding,
wherein an impact mark extending along the bracket welded portion is formed on a region including a weld toe portion of the bracket welded portion.

5. The body frame of a transport vehicle according to any one of Claims 1 to 4,
wherein the side member includes
a pair of side plates extending in the front-rear direction,
a connection plate connecting an upper end portion and a lower end portion of the side plate in the width direction, and
a side member welded portion at which the side plate and the connection plate are fixed to each other by fillet welding, and
an impact mark is not formed on a region including a weld toe portion of the side member welded portion.

6. A transport vehicle comprising:
a front frame;
a rear frame; and
a universal joint connecting the front frame and the rear frame,
wherein at least the front frame among the front frame and the rear frame is the body frame of a transport vehicle according to any one of Claims 1 to 5.

7. A method for manufacturing a body frame of a transport vehicle, the method comprising:
a step of preparing a frame body having a pair of side members extending in a front-rear direction at an interval from each other in a width direction, and a cross member extending in the width direction over the pair of side members;
a step of forming at least one frame welded portion at which the side member and the cross member are fixed to each other by welding; and
a step of performing a peening process such that an impact mark extending along the frame welded portion is formed on a region including a weld toe portion of the frame welded portion.

8. The method for manufacturing a body frame of a transport vehicle according to Claim 7,
wherein the side member has a flat surface portion or a groove portion at an end portion of the side member, and
the frame welded portion is a bead at which the flat surface portion or the groove portion of the side member, and the cross member are fixed to each other by fillet welding.

9. The method for manufacturing a body frame of a transport vehicle according to Claim 7 or 8, further comprising:
a step of disposing a bracket configured to support another structure on the frame body;
a step of forming at least one bracket welded portion at which the frame body and the bracket are fixed to each other by welding; and
a step of performing a peening process such that an impact mark extending along the bracket welded portion is formed on a region including a weld toe portion of the bracket welded portion.
